# EUROPÄISCHE PATENTSCHRIFT

(11) **EP 4 159 565 B1**
(45) Veröffentlichungstag und Bekanntmachung des Hinweises auf die Patenterteilung: **01.04.2026**
(21) Anmeldenummer: 22195175.9
(22) Anmeldetag: 12.09.2022
(51) Int. Cl.: B60W 30/09, B60W 30/095, B60W 50/14

(54) **VERFAHREN ZUR AUSGABE VON KOLLISIONSWARNUNGEN FÜR EIN LAND-WIRTSCHAFTLICHES FAHRZEUGGESPANN**
METHOD FOR ISSUING COLLISION WARNINGS FOR AN AGRICULTURAL VEHICLE COMBINATION
PROCÉDÉ D'ÉMISSION D'ALERTES DE COLLISION POUR UN ATTELAGE DE VÉHICULE AGRICOLE

(30) Priorität: 01.10.2021 DE 102021125525
(43) Veröffentlichungstag der Anmeldung: 05.04.2023
(73) Patentinhaber: Deere & Company, Moline, IL 61265 (US)
(72) Erfinder: Flemming, Axel, 68163 Mannheim (DE); Hellmann, Dennis, 68163 Mannheim (DE)
(74) Vertreter: Dehnhardt, Florian Christopher

(56) Entgegenhaltungen:
- WO-A1-2019/094843
- WO-A1-2020/164867
- WO-A2-2018/132608
- US-A1- 2007 219 720
- US-A1- 2021 122 368

## Beschreibung

Die Erfindung betrifft ein Verfahren zur Ausgabe von Kollisionswarnungen für ein landwirtschaftliches Fahrzeuggespann, umfassend einen landwirtschaftlichen Traktor sowie ein an dem landwirtschaftlichen Traktor insbesondere in einem Heckbereich angebrachtes Anbau- oder Zusatzgerät.

Aus der DE 10 2013 011 089 A1 geht ein Antikollisionssystem für ein landwirtschaftliches Fahrzeug hervor. Das Antikollisionssystem weist einen ersten Sensor zur Erfassung der Abmessungen eines in Fahrtrichtung vor dem Fahrzeug zur Verfügung stehenden Lichtraumprofils, einen zweiten Sensor zur Erfassung der Abmessungen einer von dem Fahrzeug bewegten Last in Form eines Transportanhängers für Silage, und eine mit dem ersten Sensor und dem zweiten Sensor verbundene Verarbeitungseinrichtung auf, die anhand der Signale des ersten Sensors und des zweiten Sensors die Abmessungen des Lichtraumprofils mit den Abmessungen des Transportanhängers vergleicht und im Falle einer drohenden Kollision zwischen dem Transportanhänger und einer Begrenzung des Lichtraumprofils ein Warnsignal abgibt.

Die Funktion des bekannten Antikollisionssystems beschränkt sich auf einen Vergleich der Abmessungen zwischen dem Transportanhänger und dem in Richtung des vorausliegenden Fahrtwegs zur Verfügung stehenden Lichtraumprofil, lässt jedoch unter anderem den Einfluss voraussichtlich auftretender Ausscherbewegungen des Transportanhängers, beispielsweise beim Abbiegen an einer Weggabelung oder Kreuzung, außer Acht.

US 2021/122368 A1 bietet eine Methode und ein System zur Überwachung der Umgebung eines Fahrzeugs, um Fahrer in Verkehrssituationen zu unterstützen und die Handhabung des Fahrzeugs zu erleichtern, insbesondere in Bereichen mit schlechter Sicht oder komplexen Verkehrssituationen. Das System ist besonders nützlich für landwirtschaftliche und Baufahrzeuge, insbesondere solche mit Anhängern, im Straßenverkehr und in Bereichen mit schlechter Sicht wie Kreuzungen, Ein- und Ausfahrten und Hofbereichen.

Es ist daher Aufgabe der vorliegenden Erfindung, ein Verfahren der eingangs genannten Art bezüglich einer erweiterten Warnung des Fahrers vor möglichen Kollisionen mit entlang eines Fahrtwegs angrenzenden Hindernissen weiterzubilden.

Diese Aufgabe wird durch ein Verfahren mit den Merkmalen des Patentanspruchs 1 gelöst.

Bei dem Verfahren zur Ausgabe von Kollisionswarnungen für ein landwirtschaftliches Fahrzeuggespann, das einen landwirtschaftlichen Traktor sowie ein an dem landwirtschaftlichen Traktor insbesondere in einem Heckbereich angebrachtes Anbauoder Zusatzgerät umfasst, ist vorgesehen, dass von einer Kontrolleinheit
(a) eine das Fahrzeuggespann umhüllende Risikozone ermittelt wird, wobei die Risikozone einen aufgrund eines entlang eines zurückzulegenden Fahrtwegs zu erwartenden Bewegungsverlaufs des Fahrzeuggespanns von dessen Außenkonturen überstrichenen Oberflächenbereich auf der Erdoberfläche wiedergibt,
(b) in der Risikozone befindliche und/oder in diese aufgrund einer Fahrtrichtung und/oder eines Fahrtrichtungsverlaufs des Fahrzeuggespanns voraussichtlich eintretende Objekte aus einer kartografischen Datenbank und/oder durch sensorische Umfelderfassung ermittelt werden,
(c) eine Fahrerwarnung ausgegeben wird, wenn ein in der Risikozone befindliches und/oder in diese voraussichtlich eintretendes Objekt identifiziert und damit als Hindernis eingestuft wird,
(d) der Verlauf der Risikozone nach Maßgabe fahrtbedingter Seitwärts- und/oder Schwenkbewegungen des Anbau- oder Zusatzgeräts angepasst wird.

Aufgrund des auf einer Beurteilung des zu erwartenden Bewegungsverlaufs des Fahrzeuggespanns beruhenden vorausschauenden Ansatzes lassen sich zukünftige Ereignisse, die zu einer Neubewertung der Kollisionsverhältnisse führen, zum Zwecke der erweiterten Warnung des Fahrers einbeziehen. Hierzu zählen unter anderem auch entlang des Fahrtwegs auftretende Ausscherbewegungen des Anbau- oder Zusatzgeräts am landwirtschaftlichen Traktor, beispielsweise beim Abbiegen an einer Weggabelung oder Kreuzung.

Der von der Außenkontur des Fahrzeuggespanns, mithin der durch dessen bauliche Begrenzungen entlang des vorausliegenden Fahrtwegs beanspruchte Oberflächenbereich, wird dabei maßgeblich durch Modell bzw. Typ des landwirtschaftlichen Traktors sowie des daran angebrachten Anbau- oder Zusatzgeräts beeinflusst, wobei im Falle eines gezogenen Anbau- oder Zusatzgeräts zusätzlich der gegenüber dem landwirtschaftlichen Traktor auftretende Anstell- bzw. Knickwinkel zu berücksichtigen ist, der sich wiederum aus dem zu erwartenden Bewegungsverlauf des Fahrzeuggespanns ergibt. Die entsprechenden modell- bzw. typspezifischen Konturinformationen können in einer mit der Kontrolleinheit kommunizierenden Speichereinheit hinterlegt sein und lassen sich bedienerseitig über eine mit der Kontrolleinheit kommunizierende Bedienerschnittstelle auswählen. Auch ist es denkbar, diese für ein bestimmtes Anbau- oder Zusatzgerät durch optische Vermessung mittels einer dem landwirtschaftlichen Traktor zugeordneten bildgebenden Einrichtung zu gewinnen. Bei letzterer kann es sich um ein Kamerasystem oder ein Lidar handeln. Die Ergebnisse der Vermessung können zugleich der Aktualisierung bzw. Ergänzung der in der Speichereinheit enthaltenen Konturinformationen dienen.

Eine Vorhersage des zu erwartenden Bewegungsverlaufs des Fahrzeuggespanns wie auch von Fahrtrichtung und Fahrtrichtungsverlauf ist anhand von für den zurückzulegenden Fahrtweg charakteristischen Größen möglich. Zu diesen Größen gehört neben einem an lenkbaren Rädern bzw. einer Lenkhandhabe des landwirtschaftlichen Traktors beobachteten Lenkeinschlag ferner dessen Fahrtgeschwindigkeit, wobei weitere Größen in Form eines an dem landwirtschaftlichen Traktor auftretenden Schwimm- oder Gierwinkels verfeinernd berücksichtigt werden können. Ebenfalls denkbar ist die Einbeziehung kartografischer Informationen hinsichtlich eines in Fahrtrichtung liegenden Weg- bzw. Straßenverlaufs, die seitens eines GPS-gestützten Navigationssystems bereitgestellt werden können.

Der Umfang der Vorhersage des zu erwartenden Bewegungsverlaufs ist typischerweise auf einige 10 Meter im Voraus begrenzt und geht von der Annahme aus, dass sich insbesondere Lenkeinschlag und Fahrtgeschwindigkeit des landwirtschaftlichen Traktors unter gewöhnlichen Umständen stetig und nicht etwa abrupt ändern. Angesichts der im landwirtschaftlichen Bereich vergleichsweise geringen Fahrtgeschwindigkeiten ist der so erzielte Vorhersagehorizont jedoch ausreichend, um eine mögliche Kollisionsgefahr mit im Weg liegenden Hindernissen rechtzeitig zu erkennen sowie den Fahrer zur Ausführung geeigneter Gegenmaßnahmen zu veranlassen.

Zur Erkennung, ob sich ein Objekt in der ermittelten Risikozone befindet oder in diese voraussichtlich eintritt, wird von der Kontrolleinheit dessen aktuelle Lage bestimmt. Dies kann situationsabhängig auf unterschiedliche Art und Weise erfolgen. Eine erste Möglichkeit sieht vor, dass der Verlauf der ermittelten Risikozone von der Kontrolleinheit durch Verknüpfung mit GPS-gestützt gewonnenen Positionsinformationen kartografisch verortet wird. Anschließend erfolgt ein Abgleich mit der Lage des betreffenden Objekts, wobei vorausgesetzt wird, dass diese in der kartografischen Datenbank hinterlegt ist. Eine zweite Möglichkeit sieht vor, dass das Fahrzeuggespann bzw. der landwirtschaftliche Traktor das relevante Bezugssystem für den Verlauf der Risikozone und die Lage des Objekts bildet. Dies kann gerade für im Zuge der sensorischen Umfelderfassung ermittelte Objekte sinnvoll sein, deren absolute (kartografische) Lage nicht bekannt ist. Eine auf das Fahrzeuggespann bzw. den landwirtschaftlichen Traktor bezogene Lagebestimmung ist auch für den Fall von Bedeutung, dass aufgrund eines unzureichenden Satellitenempfangs eine GPS-gestützte Gewinnung der Positionsinformationen nicht möglich ist. Solche Situationen ergeben sich beispielsweise in überdachten Bereichen wie Lagerhallen oder Scheuern. Vorteilhafte Ausgestaltungen des erfindungsgemäßen Verfahrens gehen aus den Unteransprüchen hervor.

Um die Qualität der Lageermittlung zu erhöhen, kann vorgesehen sein, dass die sensorische Umfelderfassung mittels wenigstens einer dem landwirtschaftlichen Traktor und/oder dem Anbau- oder Zusatzgerät zugeordneten bildgebenden Einrichtung durchgeführt wird, wobei eine Vielzahl von entlang des Fahrtwegs des Fahrzeuggespanns aus verschiedenen Perspektiven aufgenommenen Bilddaten überlagert wird. Der durch Rauschen oder andere Einflüsse verursachte Fehler einzelner Bilddaten lässt sich so gezielt verringern.

Erfindungsgemäß wird der Verlauf der Risikozone von der Kontrolleinheit nach Maßgabe fahrtbedingter Seitwärts- und/oder Schwenkbewegungen des Anbau- oder Zusatzgeräts angepasst. Derartige fahrtbedingte Seitwärts- und/oder Schwenkbewegungen können durch ein seitliches Überschwingen des Anbau- oder Zusatzgeräts verursacht werden. Ein derartiges Überschwingen tritt beispielweise bei an einem Dreipunkt-Kraftheber angebrachten Anbau- oder Zusatzgeräten in angehobenem Zustand während der Durchführung von Transportfahrten infolge eines vorhandenen Seitenspiels des Dreipunkt-Krafthebers um eine Geräteruhelage auf. Der Umfang der fahrtbedingten Seitwärtsund Schwenkbewegungen kann dabei ausgehend von dem entlang des zurückzulegenden Fahrtwegs zu erwartenden Bewegungsverlauf des Fahrzeuggespanns unter Zugrundelegung des seitendynamischen Verhaltens des Anbau- oder Zusatzgeräts am Dreipunkt-Kraftheber vorhergesagt werden. Das seitendynamische Verhalten des Anbau- oder Zusatzgeräts wird hierbei als bekannt vorausgesetzt und lässt sich vorab im Versuch ermitteln.

Des Weiteren besteht die Möglichkeit, dass im Zuge der sensorischen Umfelderfassung ermittelte statische, d.h. feststehende und daher in der Regel dauerhaft vorhandene Objekte von der Kontrolleinheit kartografiert und in der Datenbank zum Zwecke ihrer Vervollständigung bzw. Aktualisierung hinterlegt werden. Bei diesen Objekten kann es sich um Leitplanken, Straßenschilder, Zäune, größere Felsbrocken, Randbebauungen und dergleichen handeln.

Die sensorische Umfelderfassung kann bei erkannter erneuter Annäherung an ein bestimmtes Objekt wiederholt werden, sodass sich feststellen lässt, ob dieses weiterhin vorhanden ist oder nicht. In letzterem Fall wird dieses in der kartografischen Datenbank gelöscht. Zur Reduzierung des Datenvolumens ist es zudem denkbar, einen in der kartografischen Datenbank enthaltenen Eintrag nach Ablauf einer vorgegebenen Speicherzeit nur dann beizubehalten, wenn das zugehörige Objekt zuvor als Hindernis eingestuft worden ist und daher beim erneuten Befahren desselben Fahrtweges ein potentielles Risiko darstellt.

Um eine Kollisionsgefahr soweit wie möglich auszuschließen, kann vorgesehen sein, dass von der Kontrolleinheit bei Ausbleiben einer aufgrund der ausgegebenen Fahrerwarnung zu erwartenden bedienerseitigen Reaktion (typischerweise durch Abbremsen oder Ausführung eines Ausweichmanövers) ein selbsttätiger Notbremsvorgang ausgelöst wird. Die Auslösung des Notbremsvorgangs kann hierbei nach Ablauf einer vorgegebenen Warnzeitdauer durch fahrerunabhängiges Eingreifen in zugehörige Radbremseinrichtungen des landwirtschaftlichen Traktors erfolgen.

In diesem Zusammenhang ist es vorstellbar, den Fahrer auf eine zunehmende Kollisionsgefahr aufmerksam zu machen, indem die Fahrerwarnung von der Kontrolleinheit vor Auslösen des selbsttätigen Notbremsvorgangs stufenweise eskaliert wird. Denkbar ist eine optische erste Warnstufe, auf die eine optisch-akustische zweite Warnstufe folgt, woraufhin bei Ausbleiben einer bedienerseitigen Reaktion schließlich der selbsttätige Notbremsvorgang ausgelöst wird. Ergänzend kann in zumindest einer der Warnstufen eine haptische Rückmeldung durch eine auf die Lenkhandhabe oder einen Fahrersitz aufgeprägte Vibration oder dergleichen erfolgen. Der ersten und zweiten Warnstufe sind hierbei fest vorgegebene Warnzeitdauern zugeordnet, diese können jeweils in der Größenordnung einiger weniger Sekunden liegen.

Anstelle der vorstehenden zeitbasierten Eskalation der Fahrerwarnung, besteht auch die Möglichkeit, dass den ermittelten Objekten von der Kontrolleinheit eine spezifische Kollisionswahrscheinlichkeit zugewiesen wird, wobei die Fahrerwarnung nach Maßgabe der zugewiesenen spezifischen Kollisionswahrscheinlichkeit angepasst wird. So können der optischen ersten bzw. optisch-akustischen zweiten Warnstufe jeweils unterschiedliche Signalfarben zugeordnet sein, beispielsweise der ersten Warnstufe die Farbe "gelb" entsprechend einer mäßigen Kollisionsgefahr und der zweiten Warnstufe die Farbe "rot" entsprechend einer akuten Kollisionsgefahr. Wird ein unkritisches Objekt identifiziert, das keine Kollisionsgefahr darstellt, so kann eine weitere Warnstufe der Farbe "grün" vorgesehen sein. Diese stellt eher eine Information des Fahrers als eine Warnung im eigentliche Sinne dar. Die Verwendung einer derartigen "Signalampel" zur Visualisierung der Kollisionswahrscheinlichkeit ist für den Fahrer vertraut und daher intuitiv rasch erfassbar. Befinden sich in der Umgebung der ermittelten Risikozone keinerlei Objekte, kann die "Signalampel" auch deaktiviert werden.

Als Charakteristika für die Zuweisung einer spezifischen Kollisionswahrscheinlichkeit können neben einem aus der aktuellen Fahrtgeschwindigkeit abgeschätzten Kollisionszeitpunkt, also dem zeitlichen Abstand des Fahrzeuggespanns bis zum Kollisionszeitpunkt, Form und Abmessungen des identifizierten Objekts herangezogen werden. Diese lassen sich im Zuge der sensorischen Umfelderfassung ohne größeren Aufwand mitbestimmen, wobei zugleich eine Beurteilung dahingehend erfolgen kann, ob eine Kollision mit dem identifizierten Objekt angesichts der Bodenfreiheit des landwirtschaftlichen Traktors bzw. des daran angebrachten Anbau- oder Zusatzgeräts nicht ohnedies von vornherein auszuschließen ist.

Andererseits kann auch eine Beurteilung hinsichtlich der Frage erfolgen, ob das identifizierte Objekt aufgrund seiner Art sowie seiner Lage innerhalb der Risikozone überhaupt zu einer Beschädigung des Fahrzeuggespanns führen kann. So ist eine Beschädigung beispielsweise für lediglich den Randbereich der Risikozone streifende Äste oder dergleichen unwahrscheinlich. Die Ausgabe einer Fahrerwarnung kann dementsprechend unterbleiben. Die erforderlichen Angaben zur Art des betreffenden Objekts werden ebenfalls in der kartografischen Datenbank hinterlegt.

Das erfindungsgemäße Verfahren lässt sich bezüglich einer Erkennung höhenmäßiger Durchfahrtbeschränkungen, wie sie aufgrund von Brücken, Ampelanlagen, Toreinfahrten oder dergleichen auftreten, ergänzen. Die entsprechenden Durchfahrthöhen können gemeinsam mit ihrer aktuellen Lage in der kartografischen Datenbank hinterlegt sein oder aber im Wege der sensorischen Umfelderfassung entlang des zurückzulegenden Fahrtwegs vorausschauend ermittelt werden. Sollte eine Durchfahrt aufgrund der sich aus den entsprechenden modell- bzw. typspezifischen Konturinformationen ergebenden Abmessungen des landwirtschaftlichen Traktors bzw. des daran angebrachten Anbau- oder Zusatzgeräts nicht möglich sein, so kann die Ausgabe einer weiteren Fahrerwarnung wie auch die Durchführung eines Notbremsvorgangs vorgesehen sein.

Das erfindungsgemäße Verfahren zur Ausgabe von Kollisionswarnungen für ein landwirtschaftliches Fahrzeuggespann wird im Folgenden anhand der beigefügten Zeichnungen näher beschrieben. Es zeigen:
- Fig. 1: ein von oben dargestelltes Fahrzeuggespann mit einem landwirtschaftlichen Traktor sowie einem daran angebrachten Pflug bei Annäherung an eine Abbiegung,
- Fig. 2: eine schematische dargestellte Anordnung zur Ausführung des erfindungsgemäßen Verfahrens, und
- Fig. 3: eine Veranschaulichung des erfindungsgemäßen Verfahrens in Gestalt eines Flussdiagramms.

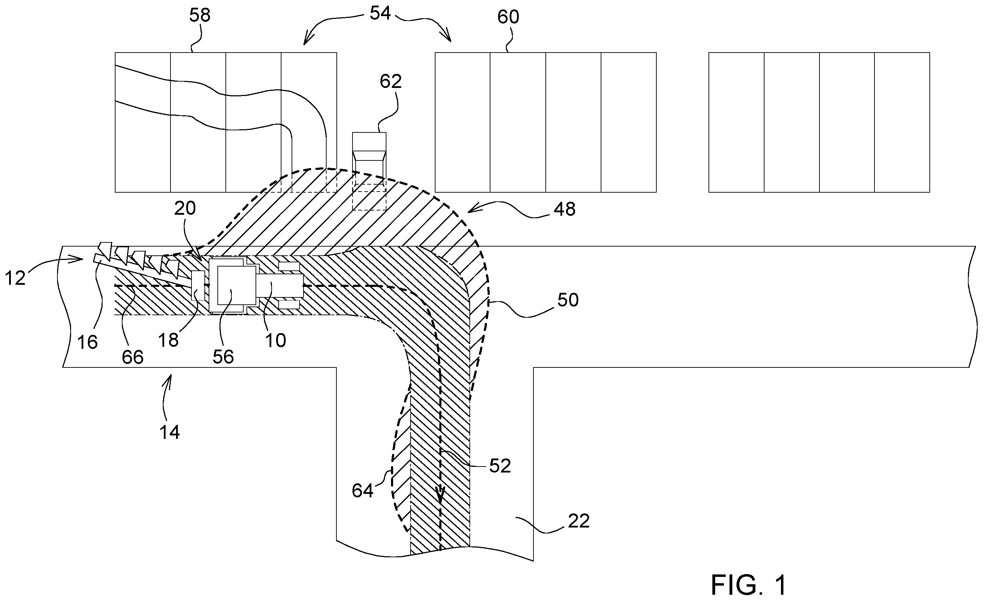

Fig. 1 zeigt in Aufsicht ein aus einem landwirtschaftlichen Traktor 10 und einem Anbau- bzw. Zusatzgerät 12 bestehendes Fahrzeuggespann 14. Bei dem Anbau- bzw. Zusatzgerät 12 handelt es sich beispielsgemäß um einen Pflug 16, der an einem herkömmlichen Dreipunkt-Kraftheber 18 im Heckbereich 20 des landwirtschaftlichen Traktors 10 angebracht ist. Dargestellt ist eine typische Fahrsituation während der Durchführung einer Transportfahrt kurz vor dem Abbiegen in einen Seitenweg 22.

Hierbei sei angemerkt, dass es sich anstelle eines Pflugs 16 auch um ein Anbau- oder Zusatzgerät 12 beliebiger anderer Bauart handeln kann, einschließlich eines gezogenen Geräts wie eines Transport- oder Ladeanhängers, der über eine Deichsel an einem Kupplungsmaul des landwirtschaftlichen Traktors 10 eingehängt sind. Auch kann statt des abgebildeten heckseitigen Dreipunkt-Krafthebers 18 ein Frontkraftheber vorgesehen ein.

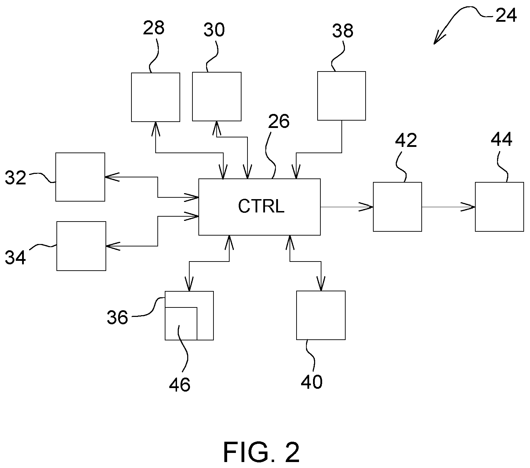

Des Weiteren zeigt Fig. 2 eine schematisch dargestellte Anordnung 24 zur Ausführung des erfindungsgemäßen Verfahrens. Die Anordnung 24 umfasst eine mikroprozessorgesteuerte Kontrolleinheit 26, die mit einer kartografischen Datenbank 28, einer Speichereinheit 30, einer dem landwirtschaftlichen Traktor 10 zugeordneten ersten bildgebenden Einrichtung 32, einer dem Anbau- bzw. Zusatzgerät 12 zugeordneten zweiten bildgebenden Einrichtung 34, einer Bedienerschnittstelle 36, einem GPS-gestützten Navigationssystem 38, einem Sensorsystem 40 zur Erfassung fahrdynamischer Größen, und einer Steuereinheit 42 zur Betätigung von Radbremseinrichtungen 44 des landwirtschaftlichen Traktors 10 in Verbindung steht.

Die kartografische Datenbank 28 ist beispielsgemäß dem landwirtschaftlichen Traktor 10 zugeordnet, abweichend davon kann diese auch durch eine Datencloud gebildet sein, auf die die Kontrolleinheit 26 über eine drahtlose Schnittstelle Zugriff hat. Die in der Datencloud enthaltenen Einträge können in diesem Fall über ein zentrales Farmmanagementsystem weiteren landwirtschaftlichen Fahrzeugen zur Verfügung gestellt werden, so zum Beispiel einer im Bearbeitungsprozess dem landwirtschaftlichen Traktor 10 folgenden Erntemaschine oder dergleichen.

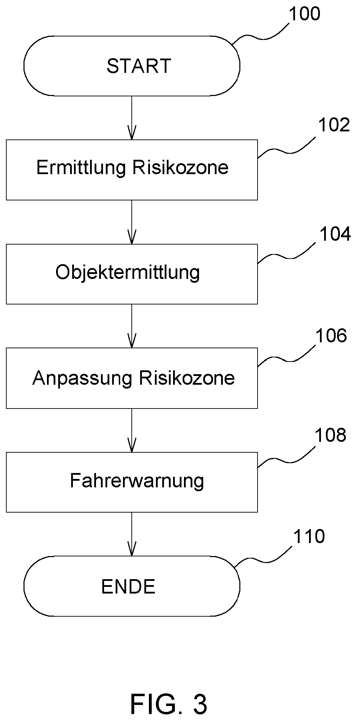

Weitere Details der Anordnung 24 werden im Rahmen ihrer Funktionsweise anhand des Flussdiagramms in Fig. 3 erläutert. Das Flussdiagramm veranschaulicht dabei ein Ausführungsbeispiel des erfindungsgemäßen Verfahrens.

Das erfindungsgemäße Verfahren wird in einem Startschritt 100 bei Inbetriebnahme des landwirtschaftlichen Traktors 10 oder aber auf Veranlassung eines Fahrers über die mit der Kontrolleinheit 26 kommunizierende Bedienerschnittstelle 36 aufgerufen. Hierzu umfasst die Bedienerschnittstelle 36 eine Eingabeeinheit 46 in Gestalt eines berührungsempfindlichen Displays (siehe Fig. 2), über das sich die betreffende Funktion menügeführt auswählen lässt.

In einem nachfolgenden ersten Schritt 102 wird von der Kontrolleinheit 26 eine das Fahrzeuggespann 14 umhüllende Risikozone 48 ermittelt (siehe Fig. 1). Die Risikozone 48 gibt einen Oberflächenbereich 50 wieder, der aufgrund eines entlang eines zurückzulegenden Fahrtwegs 52 zu erwartenden Bewegungsverlaufs des Fahrzeuggespanns 14 von dessen Außenkonturen überstrichenen bzw. beansprucht wird.

Wie in Fig. 1 zu erkennen ist, ergibt sich der Verlauf der Risikozone 48 durch die baulichen Begrenzungen 54 des Fahrzeuggespanns 14. Letztere sind bestimmend für den entlang des vorausliegenden Fahrtwegs 52 beanspruchten Oberflächenbereich 50 und werden maßgeblich durch Modell bzw. Typ des landwirtschaftlichen Traktors 10 sowie des daran angebrachten Anbauoder Zusatzgeräts 12 beeinflusst. Im Falle eines gezogenen Anbau- oder Zusatzgeräts 12 ist zusätzlich der gegenüber dem landwirtschaftlichen Traktor 10 auftretende Anstell- bzw. Knickwinkel zu berücksichtigen, der sich wiederum aus dem zu erwartenden Bewegungsverlauf des Fahrzeuggespanns 14 ergibt.

Die entsprechenden modell- bzw. typspezifischen Konturinformationen sind in der Speichereinheit 30 hinterlegt und lassen sich bedienerseitig über die mit der Kontrolleinheit 26 kommunizierende Bedienerschnittstelle 36 auswählen. Optional werden diese durch optische Vermessung des Anbau- bzw. Zusatzgeräts 12 mittels der dem landwirtschaftlichen Traktor 10 zugeordneten ersten bildgebenden Einrichtung 32 gewonnen. Bei der ersten bildgebenden Einrichtung 32 handelt es sich um ein im Dachbereich einer Fahrerkabine 56 des landwirtschaftlichen Traktors 10 zur 360°-Umfelderfassung angebrachtes Kamerasystem oder ein Lidar. Die Ergebnisse der Vermessung dienen zugleich der Aktualisierung bzw. Ergänzung der in der Speichereinheit 30 enthaltenen Konturinformationen.

In einem zweiten Schritt 104 werden von der Kontrolleinheit 26 in der Risikozone 48 befindliche und/oder in diese aufgrund einer Fahrtrichtung und/oder eines Fahrtrichtungsverlaufs des Fahrzeuggespanns 14 voraussichtlich eintretende Objekte aus der kartografischen Datenbank 28 und/oder durch sensorische Umfelderfassung unter Verwendung der ersten und zweiten bildgebenden Einrichtungen 32, 34 ermittelt.

Hierbei ist die zweite bildgebende Einrichtung 34 ebenfalls als Kamerasystem oder Lidar ausgebildet, das die mittels der ersten bildgebenden Einrichtung 32 im Umgebungsbereich des landwirtschaftlichen Traktors 10 durchgeführte sensorische Umfelderfassung in Bezug auf das Anbau- bzw. Zusatzgerät 12 erweitert.

Um die Qualität der Lageermittlung zu erhöhen, wird von der Kontrolleinheit 26 eine Vielzahl von entlang des Fahrtwegs 52 des Fahrzeuggespanns 14 aus verschiedenen Perspektiven aufgenommenen Bilddaten überlagert. Der durch Rauschen oder andere Einflüsse verursachte Fehler einzelner Bilddaten lässt sich so gezielt verringern. Bei geringeren Ansprüchen an die Datenqualität kann optional auch lediglich die erste bildgebende Einrichtung 32 vorgesehen sein.

Ergänzend werden im Zuge der sensorischen Umfelderfassung ermittelte statische, d.h. feststehende und daher in der Regel dauerhaft vorhandene Objekte von der Kontrolleinheit 26 kartografiert und in der Datenbank 28 zum Zwecke ihrer Vervollständigung bzw. Aktualisierung hinterlegt. Gemäß der Darstellung in Fig. 1 handelt es sich bei diesen Objekten beispielsgemäß um eine Randbebauung in Gestalt zweier Gebäude 58, 60 sowie ein dazwischen abgestelltes Kraftfahrzeug 62.

Die Vorhersage des zu erwartenden Bewegungsverlaufs des Fahrzeuggespanns 14 wie auch von Fahrtrichtung und Fahrtrichtungsverlauf erfolgt im zweiten Schritt 104 anhand von für den zurückzulegenden Fahrtweg 52 charakteristischen Größen. Zu diesen Größen gehört neben einem an lenkbaren Rädern bzw. einer Lenkhandhabe des landwirtschaftlichen Traktors 10 beobachteten Lenkeinschlag ferner dessen Fahrtgeschwindigkeit, wobei weitere Größen in Form eines an dem landwirtschaftlichen Traktor 10 auftretenden Schwimm- oder Gierwinkels verfeinernd berücksichtigt werden können. Die betreffenden fahrdynamischen Größen werden von dem im landwirtschaftlichen Traktors 10 angeordneten Sensorsystem 40 erfasst und an die Kontrolleinheit 26 übermittelt. Zusätzlich bezieht die Kontrolleinheit 26 kartografische Informationen hinsichtlich eines in Fahrtrichtung liegenden Weg- bzw. Straßenverlaufs, die seitens des GPS-gestützten Navigationssystems 38 bereitgestellt werden, ein.

Zur Erkennung, ob sich ein Objekt in der ermittelten Risikozone 48 befindet oder in diese voraussichtlich eintritt, wird von der Kontrolleinheit 26 dessen aktuelle Lage bestimmt. Dies erfolgt situationsabhängig auf unterschiedliche Art und Weise.

Eine erste Vorgehensweise sieht vor, dass der Verlauf der ermittelten Risikozone 48 von der Kontrolleinheit 26 mithilfe des Navigationssystems 38 durch Verknüpfung mit GPS-gestützt gewonnenen Positionsinformationen kartografisch verortet wird. Anschließend erfolgt ein Abgleich mit der Lage des betreffenden Objekts, wobei vorausgesetzt wird, dass diese in der kartografischen Datenbank 28 hinterlegt ist. Beispielsgemäß erfolgt eine derartige Ermittlung für die in Fig. 1 am Wegesrand gelegenen ersten und zweiten Gebäude 58, 60, wobei sich das erste Gebäude 58 innerhalb der ermittelten Risikozone 48 befindet und damit beim Abbiegen des Fahrzeuggespanns 14 bezüglich des daran angebrachten Anbau- bzw. Zusatzgeräts 12 voraussichtlich im Wege liegt. Das zweite Gebäude 60 hingegen liegt außerhalb der ermittelten Risikozone 48, ist mithin als unkritisch anzusehen.

Eine zweite Vorgehensweise sieht vor, dass das Fahrzeuggespann 14 bzw. der landwirtschaftliche Traktor 10 das relevante Bezugssystem für den Verlauf der Risikozone 48 und die Lage des Objekts bildet. Dies kann gerade für im Zuge der sensorischen Umfelderfassung ermittelte Objekte sinnvoll sein, deren absolute (kartografische) Lage nicht bekannt ist. Vorliegend gilt dies für das zwischen den beiden Gebäuden 58, 60 abgestellte Kraftfahrzeug 62, es kann es sich aber ebenso gut auch um ein statisches Hindernis handeln, das in der kartografischen Datenbank 28 nicht verzeichnet ist.

Der Verlauf der Risikozone 48 wird von der Kontrolleinheit 26 in einem nachfolgenden dritten Schritt 106 nach Maßgabe fahrtbedingter Seitwärts- und/oder Schwenkbewegungen des Anbau- bzw. Zusatzgeräts 12 angepasst. Derartige fahrtbedingte Seitwärts- und/oder Schwenkbewegungen können beim Abbiegen durch ein seitliches Überschwingen 64 des Anbau- bzw. Zusatzgeräts 12 in angehobenem Zustand infolge eines vorhandenen Seitenspiels des Dreipunkt-Krafthebers 18 um eine Geräteruhelage 66 auftreten (siehe Fig. 1). Der Umfang der fahrtbedingten Seitwärts- und Schwenkbewegungen wird von der Kontrolleinheit 26 ausgehend von dem entlang des zurückzulegenden Fahrtwegs 52 zu erwartenden Bewegungsverlauf des Fahrzeuggespanns 14 unter Zugrundelegung des seitendynamischen Verhaltens des Anbau- oder Zusatzgeräts 12 am Dreipunkt-Kraftheber 18 vorhergesagt. Das seitendynamische Verhalten des Anbau- bzw. Zusatzgeräts 12 wird hierbei als bekannt vorausgesetzt und lässt sich vorab im Versuch ermitteln. Die so ermittelten Angaben sind modell- bzw. typspezifisch für das jeweilige Anbau- bzw. Zusatzgerät 12 und werden mit den zugehörigen Konturinformationen in der Speichereinheit 30 abrufbar hinterlegt.

In einem vierten Schritt 108 wird von der Kontrolleinheit 26 durch Ansteuerung der Bedienerschnittstelle 36 eine Fahrerwarnung ausgegeben, wenn ausgehend von den im dritten Schritt 106 gewonnenen Informationen ein in der Risikozone 48 befindliches und/oder in diese voraussichtlich eintretendes Objekt identifiziert und damit als Hindernis eingestuft wird. Vorliegend trifft dies für das erste Gebäude 58 sowie das daneben abgestellte Kraftfahrzeug 62 zu. Beide Objekte sind aufgrund ihrer innerhalb der Risikozone 48 erkannten Lage als Hindernisse anzusehen.

Wahlweise werden für die Ausgabe der Fahrerwarnung im vierten Schritt 108 verschiedene Ansätze verfolgt:

### Zeitbasierte Fahrerwarnung

Um eine Kollisionsgefahr soweit wie möglich auszuschließen, ist zunächst vorgesehen, dass von der Kontrolleinheit 26 bei Ausbleiben einer aufgrund der ausgegebenen Fahrerwarnung zu erwartenden bedienerseitigen Reaktion ein selbsttätiger Notbremsvorgang ausgelöst wird. Die Auslösung des Notbremsvorgangs erfolgt hierbei nach Ablauf einer vorgegebenen Warnzeitdauer durch fahrerunabhängiges Eingreifen in die Radbremseinrichtungen 44 des landwirtschaftlichen Traktors 10 über die mit der Kontrolleinheit 26 kommunizierende Steuereinheit 42.

Um den Fahrer auf eine zunehmende Kollisionsgefahr aufmerksam zu machen, wird die Fahrerwarnung von der Kontrolleinheit 26 vor Auslösen des selbsttätigen Notbremsvorgangs stufenweise eskaliert. Vorgesehen ist eine optische erste Warnstufe, auf die eine optisch-akustische zweite Warnstufe folgt, woraufhin bei Ausbleiben einer bedienerseitigen Reaktion schließlich der selbsttätige Notbremsvorgang ausgelöst wird. Der ersten und zweiten Warnstufe sind hierbei fest vorgegebene Warnzeitdauern zugeordnet, diese liegen jeweils in der Größenordnung einiger weniger Sekunden.

### Risikobasierte Fahrerwarnung

Anstelle der vorstehenden zeitbasierten Eskalation der Fahrerwarnung, wird hier den ermittelten Objekten von der Kontrolleinheit 26 eine spezifische Kollisionswahrscheinlichkeit zugewiesen, wobei die Fahrerwarnung nach Maßgabe der zugewiesenen spezifischen Kollisionswahrscheinlichkeit angepasst wird. So sind der optischen ersten bzw. optisch-akustischen zweiten Warnstufe jeweils unterschiedliche Signalfarben zugeordnet, beispielsgemäß der ersten Warnstufe die Farbe "gelb" entsprechend einer mäßigen Kollisionsgefahr und der zweiten Warnstufe die Farbe "rot" entsprechend einer akuten Kollisionsgefahr. Wird ein unkritisches Objekt identifiziert, das keine Kollisionsgefahr darstellt, so ist eine weitere Warnstufe der Farbe "grün" vorgesehen. Diese stellt eher eine Information des Fahrers als eine Warnung im eigentliche Sinne dar. Die Verwendung einer derartigen "Signalampel" zur Visualisierung der Kollisionswahrscheinlichkeit ist für den Fahrer vertraut und daher intuitiv rasch erfassbar. Befinden sich in der Umgebung der ermittelten Risikozone keinerlei Objekte, so wird die "Signalampel" von der Kontrolleinheit 26 deaktiviert.

Als Charakteristika für die Zuweisung einer spezifischen Kollisionswahrscheinlichkeit werden neben einem aus der aktuellen Fahrtgeschwindigkeit abgeschätzten Kollisionszeitpunkt, also dem zeitlichen Abstand des Fahrzeuggespanns 14 bis zum Kollisionszeitpunkt, Form und Abmessungen des identifizierten Objekts herangezogen. Diese werden im Zuge der sensorischen Umfelderfassung mitbestimmt, wobei von der Kontrolleinheit 26 zugleich eine Beurteilung dahingehend erfolgt, ob eine Kollision mit dem identifizierten Objekt angesichts der Bodenfreiheit des landwirtschaftlichen Traktors 10 bzw. des daran angebrachten Anbau- oder Zusatzgeräts 12 nicht ohnedies von vornherein auszuschließen ist. Zusätzlich berücksichtigt die Kontrolleinheit 26 die Art des identifizierten Objekts. Ist eine Beschädigung des Fahrzeuggespanns 14 aufgrund seiner Form, Abmessungen, Art und Lage als unwahrscheinlich anzusehen, so unterbleibt die Ausgabe einer Fahrerwarnung. Die erforderlichen Angaben zur Art des betreffenden Objekts sind ebenfalls in der kartografischen Datenbank 28 hinterlegt

Eine typische Abfolge bei der Ausgabe der Fahrerwarnung sieht vor, dass die Anzeige der Warnstufe der Farbe "grün" bei einem zeitlichen Abstand von 5 Sekunden und mehr, sowie die Warnstufe der Farbe "gelb" bei einem zeitlichen Abstand zwischen 1 und 5 Sekunden erfolgt.

Anschließend wird das Verfahren in einem Schlussschritt 110 beendet.

## Patentansprüche

1. Verfahren zur Ausgabe von Kollisionswarnungen für ein landwirtschaftliches Fahrzeuggespann, umfassend einen landwirtschaftlichen Traktor (10) sowie ein an dem landwirtschaftlichen Traktor (10) insbesondere in einem Heckbereich (20) angebrachtes Anbau- oder Zusatzgerät (12), **dadurch gekennzeichnet, dass** von einer Kontrolleinheit (26)
(a) eine das Fahrzeuggespann (14) umhüllende Risikozone (48) ermittelt wird, wobei die Risikozone (48) einen aufgrund eines entlang eines zurückzulegenden Fahrtwegs (52) zu erwartenden Bewegungsverlaufs des Fahrzeuggespanns (14) von dessen Außenkonturen überstrichenen Oberflächenbereich (50) auf der Erdoberfläche wiedergibt,
(b) in der Risikozone (48) befindliche und/oder in diese aufgrund einer Fahrtrichtung und/oder eines Fahrtrichtungsverlaufs des Fahrzeuggespanns (14) voraussichtlich eintretende Objekte aus einer kartografischen Datenbank (28) und/oder durch sensorische Umfelderfassung ermittelt werden,
(c) eine Fahrerwarnung ausgegeben wird, wenn ein in der Risikozone (48) befindliches und/oder in diese voraussichtlich eintretendes Objekt identifiziert und damit als Hindernis eingestuft wird,
(d) der Verlauf der Risikozone (48) nach Maßgabe fahrtbedingter Seitwärts- und/oder Schwenkbewegungen des Anbau- oder Zusatzgeräts (12) angepasst wird.

2. Verfahren nach Anspruch 1, **dadurch gekennzeichnet, dass** die sensorische Umfelderfassung mittels wenigstens einer dem landwirtschaftlichen Traktor (10) und/oder dem Anbau- oder Zusatzgerät (12) zugeordneten bildgebenden Einrichtung (32, 34) durchgeführt wird, wobei eine Vielzahl von entlang des Fahrtwegs (52) des Fahrzeuggespanns (14) aus verschiedenen Perspektiven aufgenommenen Bilddaten überlagert wird.

3. Verfahren nach Anspruch 1 oder 2, **dadurch gekennzeichnet, dass** die fahrtbedingten Seitwärts- und/oder Schwenkbewegungen des Anbau- oder Zusatzgeräts (12) mittels wenigstens einer dem landwirtschaftlichen Traktor (10) zugeordneten bildgebenden Einrichtung (32) erfasst werden.

4. Verfahren nach wenigstens einem der vorhergehenden Ansprüche, **dadurch gekennzeichnet, dass** im Zuge der sensorischen Umfelderfassung ermittelte statische Objekte von der Kontrolleinheit (26) kartografiert und in der Datenbank (28) hinterlegt werden.

5. Verfahren nach wenigstens einem der vorhergehenden Ansprüche, **dadurch gekennzeichnet, dass** von der Kontrolleinheit (26) bei Ausbleiben einer aufgrund der ausgegebenen Fahrerwarnung zu erwartenden bedienerseitigen Reaktion ein selbsttätiger Notbremsvorgang ausgelöst wird.

6. Verfahren nach Anspruch 5, **dadurch gekennzeichnet, dass** die Fahrerwarnung von der Kontrolleinheit (26) vor Auslösen des selbsttätigen Notbremsvorgangs stufenweise eskaliert wird.

7. Verfahren nach wenigstens einem der vorhergehenden Ansprüche, **dadurch gekennzeichnet, dass** den ermittelten Objekten von der Kontrolleinheit (26) eine spezifische Kollisionswahrscheinlichkeit zugewiesen wird, wobei die Fahrerwarnung nach Maßgabe der zugewiesenen spezifischen Kollisionswahrscheinlichkeit angepasst wird.

8. Verfahren nach Anspruch 7, **dadurch gekennzeichnet, dass** von der Kontrolleinheit (26) als Charakteristika für die Zuweisung einer spezifischen Kollisionswahrscheinlichkeit Form und Abmessungen des identifizierten Objekts herangezogen werden.

## Claims

1. Method for issuing collision warnings for an agricultural vehicle combination comprising an agricultural tractor (10) and an accessory or ancillary implement (12) attached to the agricultural tractor (10), in particular in a rear region (20), **characterized in that** a control unit (26)
(a) determines a risk zone (48) surrounding the vehicle combination (14), wherein the risk zone (48) represents, on the ground surface, a surface region (50) over which the outer contours of the vehicle combination pass due to a movement course of the vehicle combination (14) to be expected along a route (52) to be covered,
(b) determines objects located in the risk zone (48) and/or anticipated to enter the risk zone due to a direction of travel and/or a direction of travel course of the vehicle combination (14) from a cartographic database (28) and/or by sensor-based surroundings detection,
(c) issues a driver warning when an object located in the risk zone (48) and/or anticipated to enter the risk zone is identified and thus classified as an obstacle,
(d) adjusts the course of the risk zone (48) in accordance with the lateral and/or swivel movements of the accessory or ancillary implement (12) as a result of travel.

2. Method according to Claim 1, **characterized in that** the sensor-based surroundings detection is carried out by means of at least one imaging device (32, 34) associated with the agricultural tractor (10) and/or the accessory or ancillary implement (12), wherein a large amount of image data recorded along the route (52) of the vehicle combination (14) from different perspectives is superimposed.

3. Method according to Claim 1 or 2, **characterized in that** the travel-related lateral and/or swivel movements of the accessory or ancillary implement (12) are detected by means of at least one imaging device (32) associated with the agricultural tractor (10).

4. Method according to at least one of the preceding claims, **characterized in that** static objects determined during the course of the sensor-based surroundings detection are mapped by the control unit (26) and stored in the database (28).

5. Method according to at least one of the preceding claims, **characterized in that** an automatic emergency braking operation is initiated by the control unit (26) in the absence of an operator response to be expected due to the issued driver warning.

6. Method according to Claim 5, **characterized in that** the driver warning is gradually escalated by the control unit (26) before the automatic emergency braking operation is initiated.

7. Method according to at least one of the preceding claims, **characterized in that** a specific collision probability is assigned to the determined objects by the control unit (26), wherein the driver warning is adjusted in accordance with the assigned specific collision probability.

8. Method according to Claim 7, **characterized in that** the shape and dimensions of the identified object are used by the control unit (26) as characteristics for the assignment of a specific collision probability.

## Revendications

1. Procédé pour émettre des alertes de collision pour un attelage de véhicules agricoles comprenant un tracteur agricole (10) et un équipement porté ou accessoire (12) monté sur le tracteur agricole (10), en particulier dans une zone arrière (20), **caractérisé en ce qu'**au moyen d'une unité de commande (26),
(a) une zone de risque (48 14) entourant l'attelage de véhicules (14) est déterminée, la zone de risque (48) représentant une surface (50) sur la surface du sol couverte par ses contours extérieurs en raison d'un profil de mouvement à prévoir le long d'une trajectoire (52) à parcourir,
(b) des objets situés dans la zone de risque (48) et/ou susceptibles d'y pénétrer en raison d'un sens de marche et/ou d'un profil de direction de marche de l'attelage de véhicules (14) sont déterminés à partir d'une base de données cartographiques (28) et/ou par détection par capteurs de l'environnement,
(c) une alerte conducteur est émise lorsqu'un objet situé dans la zone de risque (48) et/ou susceptible d'y pénétrer est identifié et est ainsi classé comme obstacle,
(d) le profil de la zone de risque (48) est adapté en fonction de mouvements latéraux et/ou de pivotement liés à la marche de l'équipement porté ou accessoire (12).

2. Procédé selon la revendication 1, **caractérisé en ce que** la détection par capteurs de l'environnement est effectuée au moyen d'au moins un dispositif d'imagerie (32, 34) associé au tracteur agricole (10) et/ou à l'équipement porté ou accessoire (12), une pluralité de données d'images acquises à partir de différentes perspectives le long de la trajectoire (52) de l'attelage de véhicules (14) étant superposées.

3. Procédé selon la revendication 1 ou 2, **caractérisé en ce que** les mouvements latéraux et/ou de pivotement liés à la marche de l'équipement porté ou accessoire (12) sont détectés au moyen d'au moins un dispositif d'imagerie (32) associé au tracteur agricole (10).

4. Procédé selon au moins l'une des revendications précédentes, **caractérisé en ce que** des objets statiques déterminés au cours de la détection par capteurs de l'environnement sont cartographiés et stockés dans la base de données (28) par l'unité de commande (26).

5. Procédé selon au moins l'une quelconque des revendications précédentes, **caractérisé en ce qu'**une opération de freinage d'urgence automatique est déclenchée par l'unité de commande (26) en l'absence d'une réaction de la part de l'opérateur à prévoir sur la base de l'alerte conducteur émise.

6. Procédé selon la revendication 5, **caractérisé en ce que** l'alerte conducteur est intensifiée progressivement par l'unité de commande (26) avant le déclenchement de l'opération de freinage d'urgence automatique.

7. Procédé selon au moins l'une des revendications précédentes, **caractérisé en ce qu'**une probabilité de collision spécifique est attribuée par l'unité de commande (26) aux objets déterminés, l'alerte conducteur étant adaptée en fonction de la probabilité de collision spécifique attribuée.

8. Procédé selon la revendication 7, **caractérisé en ce que** la forme et les dimensions de l'objet identifié sont utilisées par l'unité de commande (26) en tant que caractéristiques pour l'attribution d'une probabilité de collision spécifique.
